# EUROPÄISCHE PATENTSCHRIFT

(11) **EP 3 694 744 B1**
(45) Veröffentlichungstag und Bekanntmachung des Hinweises auf die Patenterteilung: **06.12.2023**
(21) Anmeldenummer: 18786710.6
(22) Anmeldetag: 09.10.2018
(51) Int. Cl.: B60N 2/02, B60N 2/06, B60N 2/30, B60N 2/20, B60N 2/90

(54) **FAHRZEUGSITZ MIT EINEM EASY-ENTRY-MECHANISMUS**
VEHICULE SEAT WITH EASY-ENTRY MECHANISM
SIEGE DE VEHICULE AVEC MECHANISME EASY-ENTRY

(30) Priorität: 11.10.2017 DE 102017218125
(43) Veröffentlichungstag der Anmeldung: 19.08.2020
(73) Patentinhaber: Volkswagen Aktiengesellschaft, 38440 Wolfsburg (DE)
(72) Erfinder: SZLAG, Robert, 38440 Wolfsburg (DE)
(86) Internationale Anmeldenummer: PCT/EP2018/077475
(87) Internationale Veröffentlichungsnummer: WO 2019/072847

(56) Entgegenhaltungen:
- WO-A1-2012/022767
- WO-A1-2015/074633
- DE-A1-102006 001 530
- DE-A1-102013 221 132
- DE-A1-102015 218 873

## Beschreibung

Die Erfindung betrifft einen Easy-Entry-Mechanismus eines Fahrzeugsitzes zum erleichterten Einstieg einer Person in eine Sitzreihe, insbesondere eine hintere Sitzreihe.

Aus der Druckschrift DE 10 2015 218 873 A1 ist ein Easy-Entry-System für Fahrzeugsitze bekannt, welches einen erleichterten Einstieg in eine zweite oder dritte Sitzreihe eines Fahrzeuges ermöglicht. Das Easy-Entry-System ist durch einen Entriegelungshebel, welcher an einer Rückenlehne des Fahrzeugsitzes angeordnet ist, betätigbar, wodurch die Rückenlehne des Fahrzeugsitzes aus einem Einstiegsbereich schwenkt. Der Fahrzeugsitz ist zudem auf Schienen angeordnet, so dass der Fahrzeugsitz bei Betätigung des Entriegelungshebels zusätzlich oder alternativ in Fahrtrichtung aus dem Einstiegsbereich heraus verschiebbar ist. Hierbei ist es vorgesehen, dass eine Verriegelungsvorrichtung des Sitzschienenpaars mittels eines von der Schwenkbewegung der Lehne betätigten Bowdenzugs durch das Vorschwenken der Lehne des Fahrzeugsitzes entriegelt wird. Im Detail wird ein Fahrzeugsitz offenbart, der einen hinteren Fuß, einer gegenüber dem hinteren Fuß um eine Lehnendrehachse schwenkbaren Lehne aufweist. Der Fahrzeugsitz umfasst ferner mindestens ein Sitzschienenpaar zur Längsverstellung des Fahrzeugsitzes, eine Verriegelungsvorrichtung zur Verriegelung des mindestens einen Sitzschienenpaars, wobei zur Anlenkung der Lehne an dem hinteren Fuß wenigstens ein verriegelbarer Beschlag vorgesehen ist, und die Lehne in eine zur leichteren Zugänglichkeit einer hinteren Sitzreihe einnehmbare Easy-Entry-Stellung verschwenkbar ist. Zudem weist der Fahrzeugsitz eine an einem Antriebselement angeordnete Klinke auf, welche beim Verschwenken der Lehne in die Easy-Entry-Stellung von einem an der Lehne angeordneten Mitnehmer erfassbar ist und hierdurch der Bewegung der Lehne folgend mitführbar ist, wobei ein Betätigungshebel vorgesehen und dazu eingerichtet ist, derart auf die Klinke zu wirken, dass beim Verschwenken der Lehne die Klinke durch den Mitnehmer nicht erfasst wird und die Lehne über die Easy-Entry-Stellung hinweg verschwenkbar ist.

Ferner wird auf die Druckschriften DE 10 2011 101 876 A1, DE 10 2012 015 294 A1, DE 10 2013 221 925 B3, DE 20 2011 110 257 U1 und die WO 2012/022767 A1 sowie auf die Druckschrift DE 10 2013 221 132 A1 hingewiesen, die gattungsgemäße Fahrzeugsitze offenbaren.

Der Erfindung liegt die Aufgabe zugrunde, einen Easy-Entry-Mechanismus eines Fahrzeugsitzes der gattungsgemäßen Art zu verbessern.

Ausgangspunkt der Erfindung ist ein Fahrzeugsitz, insbesondere Kraftfahrzeugsitz, mit einer um eine Lehnen-Schwenkachse schwenkbaren Rückenlehne, mindestens einem Sitzschienenpaar zur Sitzlängsverstellung des Fahrzeugsitzes, einer Verriegelungsvorrichtung zur Verriegelung des mindestens einen Sitzschienenpaars, wobei zur Anlenkung der Rückenlehne gegenüber einem Sitzteil wenigstens ein verriegelbarer Beschlag vorgesehen ist, und die Rückenlehne in eine zur leichteren Zugänglichkeit einer Sitzreihe einnehmbare Easy-Entry-Stellung verschwenkbar ist, wobei der Fahrzeugsitz einen Easy-Entry-Mechanismus aufweist, der eine an einem Antriebselement angeordnete Klinke umfasst, welche beim Verschwenken der Rückenlehne in die Easy-Entry-Stellung von einem an der Rückenlehne angeordneten Easy-Entry-Anschlag erfassbar ist und hierdurch der Bewegung der Rückenlehne folgend mitführbar ist. Es ist weiter vorgesehen, dass die Klinke durch ein Easy-Entry-Betätigungselement von einer Easy-Entry-Anschlag-Ausgangsposition in eine Easy-Entry-Anschlag-Betätigungsposition bringbar ist, in der die Klinke von dem Easy-Entry-Anschlag erfassbar ist, wobei das Easy-Entry-Betätigungselement bei Betätigung eines mit dem Easy-Entry-Betätigungselement über einen ersten Bowdenzug in Wirkverbindung stehenden Easy-Entry-Auslöseelementes für eine Bewegung des Easy-Entry-Betätigungselementes sorgt, wobei das Easy-Entry-Betätigungselement eine Bowdenaufnahme für das in dem Easy-Entry-Mechanismus angeordnete eine Ende des ersten Bowdenzuges aufweist, der mit seinem anderen Ende mit dem Easy-Entry-Auslöseelement in Verbindung steht, so dass das Easy-Entry-Betätigungselement die Klinke in seiner Betätigungsposition durch eine Wirkverbindung zwischen die Klinke und das Easy-Entry-Betätigungselement in die Easy-Entry-Anschlag-Betätigungsposition verbringt.

Erfindungsgemäß ist vorgesehen, dass die Klinke in einem Drehring, der auf der Lehnendrehachse drehbar gelagert ist, auf einer zur Lehnen-Schwenkachse parallel angeordneten Klinken-Schwenkachse drehbar gelagert ist, wobei an dem Drehring ein Zugelement fest angeordnet ist.

Vorteilhaft an dieser Lösung ist, dass das Zugelement eine Bowdenaufnahme für das in dem Easy-Entry-Mechanismus angeordnete eine Ende eines zweiten Bowdenzuges aufweist, der mit seinem anderen Ende mit der Verriegelungsvorrichtung des Sitzschienenpaars in Wirkverbindung steht, wobei der Entry-Anschlag durch eine Bewegung der Rückenlehne die Klinke an der ersten Kontur erfasst, wodurch der Drehring und das Zugelement um die Lehnen-Schwenkachse verschwenkt wird, so dass der zweite Bowdenzug betätigt und die Verriegelungsvorrichtung des Sitzschienenpaars entriegelt wird.

Bei diesem Easy-Entry-Mechanismus wird ferner vorteilhaft kein Verstellelement betätigt, welches auf die Klinke einwirkt, damit beim Verschwenken der Rückenlehne die Klinke durch den Easy-Entry-Anschlag nicht erfasst wird und die Rückenlehne über die Easy-Entry-Stellung hinaus neigungsverstellbar ist, wie es bei dem in der Druckschrift DE 10 2015 218 873 A1 offenbarten Easy-Entry-Mechanismus der Fall ist. In vorteilhafter Weise ermöglicht der Easy-Entry-Mechanismus jederzeit die Neigungsverstellung der Rückenlehne, ohne dass die Klinke betätigt werden muss.

In bevorzugter Ausgestaltung der Erfindung ist vorgesehen, dass die Wirkverbindung zwischen Easy-Entry-Auslöseelement und Easy-Entry-Betätigungselement durch den ersten Bowdenzug hergestellt ist, dessen Betätigung die Betätigungsposition hervorruft.

In weiterer bevorzugter Ausgestaltung ist vorgesehen, dass das Easy-Entry-Betätigungselement eine Bowdenaufnahme für das in dem Easy-Entry-Mechanismus angeordnete eine Ende des ersten Bowdenzuges aufweist, der mit seinem anderen Ende mit einem Easy-Entry-Auslöseelement in Verbindung steht.

Zudem ist bevorzugt vorgesehen, dass die Wirkverbindung zwischen dem Easy-Entry-Betätigungselement und der Klinke durch eine, an einem in die Klinke integrierten Steuerbolzen angreifende Gleitbahn des Easy-Entry-Betätigungselementes hergestellt ist, die in der Betätigungsposition für eine Verlagerung des Steuerbolzens derart sorgt, dass eine anschlagsseitige erste Kontur der Klinke in die Easy-Entry-Anschlag nahe Betätigungsposition kommt.

Vorgesehen ist weiter bevorzugt, dass die Gleitbahn auf einer Stirnseite eines, bezogen auf eine gegenüber einer Lehnen-Schwenkachse, radial abstehenden Segmentes des Easy-Entry-Betätigungselementes gebildet ist.

Erfindungsgemäß weist das Easy-Entry-Betätigungselement gegenüber einer entlang der Lehnen-Schwenkachse angeordneten Übertragungsstange einen Freilaufmechanismus auf.

Freigabe der Rückenlehne zur Easy-Entry-Klappung in die Easy-Entry-Stellung: Vorgesehen ist weiter bevorzugt, dass die Betätigung des Easy-Entry-Betätigungselementes durch die Betätigung des Easy-Entry-Auslöseelementes, neben der Betätigung der Klinke in die Betätigungsposition, die Drehung der Übertragungsstange und damit die Entriegelung des Beschlages hervorruft, da das Easy-Entry-Betätigungselement gegenüber der Übertragungsstange über einen Freilaufmechanismus verfügt, der die Mitnahme der Übertragungsstange ohne einen Freilauf bewirkt, sobald das Easy-Entry-Auslöseelementes betätigt ist.

Bevorzugt weist das Zugelement eine Bowdenaufnahme für das in dem Easy-Entry-Mechanismus angeordnete eine Ende des zweiten Bowdenzuges auf, der mit seinem anderen Ende mit der Verriegelungsvorrichtung des Sitzschienenpaars in Wirkverbindung steht.

Freigabe des Fahrzeugsitzes zur Easy-Entry-Sitzlängsverschiebung in die Easy-Entry-Stellung:
Der Easy-Entry-Anschlag der Rückenlehne erfasst durch eine Bewegung der Rückenlehne in die Easy-Entry-Stellung die Klinke an der ersten Kontur, wodurch der Drehring und das Zugelement um die Lehnen-Schwenkachse verschwenkt wird, so dass der zweite Bowdenzug betätigt und die Verriegelungsvorrichtung des Sitzschienenpaars entriegelt wird.

Vorgesehen ist zudem, dass der Fahrzeugsitz einen auf der Übertragungsstange angeordneten Verstellhebel zur Neigungsverstellung der Rückenlehne gegenüber dem Sitzteil mit einem Freilaufmechanismus aufweist, der an dem Easy-Entry-Mechanismus angeordnet ist, jedoch kraftflussseitig von dem Easy-Entry-Mechanismus entkoppelt ist und somit für die Easy-Entry-Funktion nicht benötigt wird und nicht zum Easy-Entry-Mechanismus gehört. Der wesentliche Vorteil dieser Auskopplung des Verstellhebels aus dem Easy-Entry-Mechanismus ist in der Beschreibung näher erläutert.

Die Erfindung wird nachfolgend in einem Ausführungsbeispiel anhand der zugehörigen Zeichnungen erläutert. Es zeigen:
- Figur 1: eine perspektivische Darstellung eines erfindungsgemäßen Fahrzeugsitzes;
- Figur 2: eine perspektivische Darstellung eines Easy-Entry-Mechanismus des erfindungsgemäßen Fahrzeugsitzes;
- Figur 3A: eine Rückenlehne mit einem Lehnenanschlag, jedoch ohne einen Easy-Entry-Mechanismus des erfindungsgemäßen Fahrzeugsitzes, der in einer Explosionsdarstellung in Figur 3B gezeigt ist;
- Figur 3B: den erfindungsgemäßen Easy-Entry-Mechanismus in der Explosionsdarstellung;
- Figur 4A: den Easy-Entry-Mechanismus gemäß Figur 2, jedoch ohne Verstellhebel;
- Figur 4B: den Easy-Entry-Mechanismus gemäß Figur 2, jedoch ohne Verstellhebel und ohne Easy-Entry-Betätigungselement ;
- Figur 4C: den Easy-Entry-Mechanismus gemäß Figur 2, jedoch ohne Verstellhebel und ohne das Easy-Entry-Betätigungselement und ohne Sicherungselement;
- Figur 4D: den Easy-Entry-Mechanismus gemäß Figur 2, jedoch ohne Verstellhebel und ohne Easy-Entry-Betätigungselement und ohne Sicherungselement sowie ohne Drehring;
- Figur 5A: den Easy-Entry-Mechanismus in einer Ausgangsposition I;
- Figur 5B: den Easy-Entry-Mechanismus in einer Betätigungsposition II.

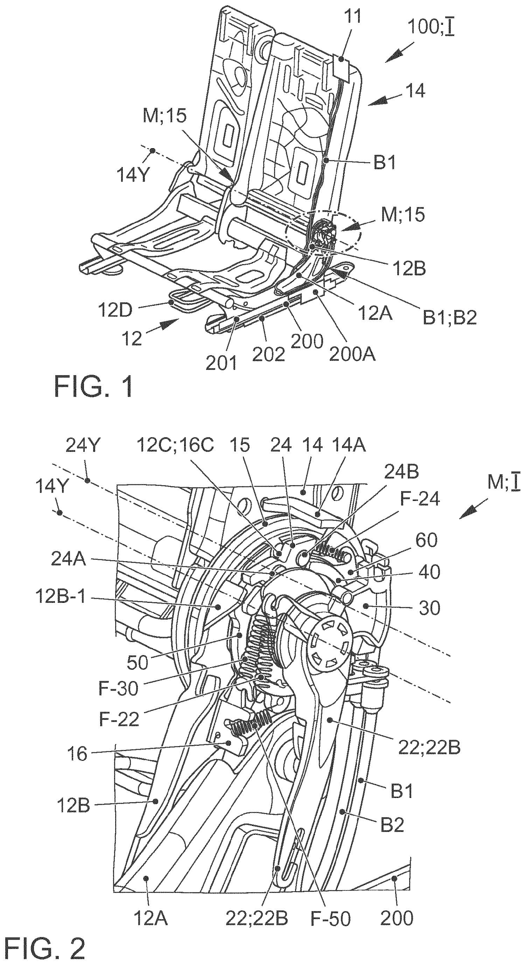

Figur 1 zeigt einen erfindungsgemäßen Fahrzeugsitz 100 in einer perspektivischen Ansicht.

Der Fahrzeugsitz 100 weist ein adapterartiges Seitenteil 12B auf, welches mit einer Sitzstruktur 12A des Sitzteiles 12 in Verbindung steht.

Der Fahrzeugsitz 100 gemäß Figur 1 umfasst gemäß den Figuren 2 (Zusammenbauzustand eines Easy-Entry-Mechanismus M) sowie 3A und 3B (Explosionsdarstellung des Easy-Entry-Mechanismus M) in einer Zusammenschau eine gegenüber dem Seitenteil 12A um eine Lehnen-Schwenkachse 14Y schwenkbare Rückenlehne 14 und mindestens ein Sitzschienenpaar 200 zur Längsverstellung des Fahrzeugsitzes 100 sowie eine Verriegelungsvorrichtung 200A zur Verriegelung des mindestens einen Sitzschienenpaars 200.

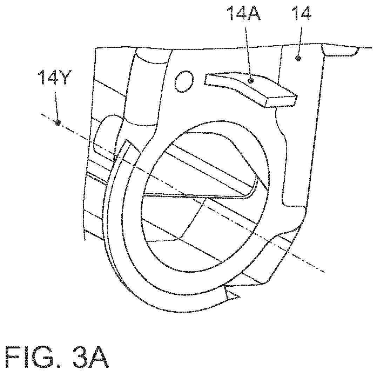

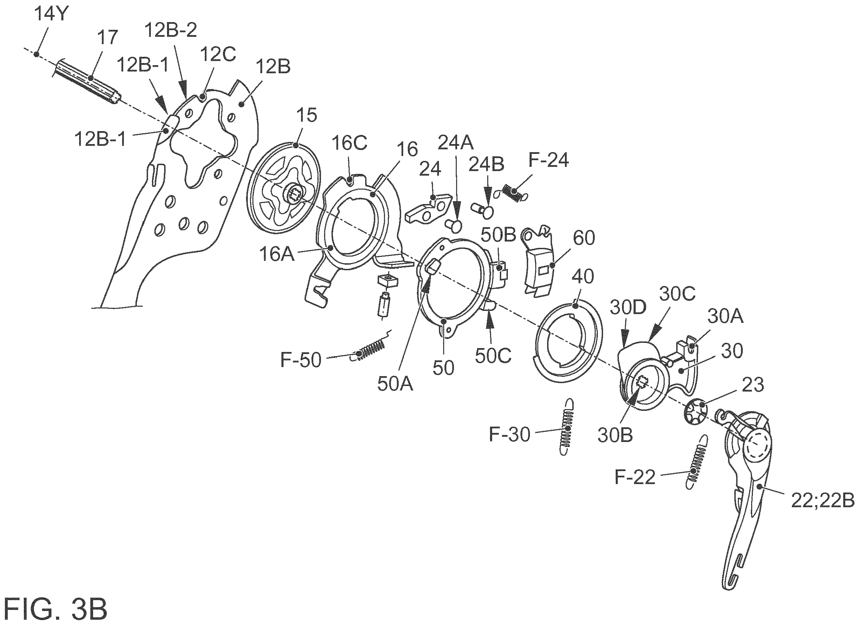

Die Figur 3A zeigt die Rückenlehne 14 mit dem Lehnenanschlag 14A, jedoch ohne den Easy-Entry-Mechanismus M. Die zugehörige Explosionsdarstellung des Easy-Entry-Mechanismus ist in Figur 3B gezeigt.

Das adapterartige Seitenteil 12B ist an der Sitzstruktur 12A des Sitzteiles 12 befestigt. Zur Anlenkung der Rückenlehne 14 ist an dem adapterartigen Seitenteil 12B wenigstens ein verriegelbarer Beschlag 15 (vergleiche Figur 3B) vorgesehen und die Rückenlehne 14 des Fahrzeugsitzes 100 ist in eine zur leichteren Zugänglichkeit, insbesondere einer hinteren Sitzreihe, einnehmbare Easy-Entry-Stellung verschwenkbar.

Der Beschlag 15 ist hierbei fluchtend mit der Lehnen-Schwenkachse 14Y angeordnet. Das Sitzteil 12 ist über den Beschlag 15 mit der Rückenlehne 14 verbunden.

Der Fahrzeugsitz 100 weist den mindestens einen verriegelbaren Beschlag 15 auf.

Zur Anlenkung der Rückenlehne 14 ist auf der dem Beschlag 15 gegenüberliegenden Seite des Fahrzeugsitzes 100 ein nicht verriegelbares Lehnenlager oder ebenfalls ein verriegelbarer Beschlag 15 (vergleiche Figur 1) angeordnet. Die Beschläge 15 sind mittels einer Übertragungsstange 17 (vergleiche Figur 3B) miteinander verbunden, so dass ein Entriegeln des einen Beschlags 15 stets zu einem Entriegeln des jeweils anderen Beschlags 15 führt.

Der Fahrzeugsitz 100 umfasst einen um die Lehnen-Schwenkachse 14Y schwenkbaren Verstellhebel 22, der mit der Übertragungsstange 17 verbunden ist, so dass eine Drehbewegung des Verstellhebels 22 zur Entriegelung des Beschlags 15 auf die Übertragungsstange 17 übertragen wird.

Der Fahrzeugsitz 100 weist drei Grundfunktionen auf:
Erste Grundfunktion - Sitzlängsverstellung des Fahrzeugsitzes 100:
Der Fahrzeugsitz 100 umfasst das Sitzschienenpaar 200, das eine obere Schiene 201 und eine karosseriefeste untere Schiene 202 aufweist.

In einem ersten Verstellbereich X1, insbesondere um 180 mm, erfolgt die Sitzlängsverstellung mittels des Sitzlängsverstellhebels 12C unabhängig von einer Verstellfunktion der Rückenlehne 14 und der Easy-Entry-Verstellung. Durch Betätigung des Sitzlängsverstellhebels 12C wird die Verriegelungsvorrichtung 200A geöffnet und die obere Schiene 201 (mithin der Fahrzeugsitz 100) ist gegenüber der karosseriefesten unteren Schiene 202 um den Betrag X1 verstellbar.

Eine weitere Sitzlängsverstellung ist ebenfalls möglich, wenn ein zweiter Bowdenzug B2 betätigt wird, wodurch ebenfalls die Verriegelungsvorrichtung 200A geöffnet und die obere Schiene 201 (mithin der Fahrzeugsitz 100) gegenüber der karosseriefesten unteren Schiene 202 um den Betrag X1 und zusätzlich um den Betrag X2, insbesondere um weitere 70 mm, verstellbar ist. Die Betätigung des zweiten Bowdenzugs B2 ist Bestandteil des Easy-Entry, der noch erläutert wird.

Zweite Grundfunktion - Rückenlehnenklappung der Rückenlehne 14:
Die Rückenlehne ist in eine Bodenstellung (nicht dargestellt) klappbar, die auch als Fold-Flat-Stellung oder Cargo-Position bezeichnet wird. Sie dient üblicherweise einer Vergrößerung des Laderaumes eines Kraftfahrzeuges. In der Bodenstellung ist die Rückenlehne 14 vollständig gemäß Figur 1 entgegen der Uhrzeigerrichtung auf das Sitzteil 12 heruntergeklappt, um einen möglichst ebenen Ladeboden zu erreichen. Hierbei wird die Rückenlehne 14 bevorzugt derart in einen Fahrzeugboden eingebracht, dass die Rückenlehne 14 mit ihrer Rückseite eine in den übrigen Laderaumboden übergehende, möglichst ebene Fläche bildet.

Auch bei der Einnahme der Easy-Entry-Stellung ist es vorgesehen, dass der Beschlag 15 zum Zwecke der Rückenlehnenklappung der Rückenlehne 14 entriegelt wird.

Bei der Rückenlehnenklappung der Rückenlehne 14 außerhalb der Easy-Entry-Funktion ist es im Gegensatz zur Easy-Entry-Funktion jedoch nicht vorgesehen, dass eine Entriegelung des Sitzschienenpaars 200 erfolgt.

Um eine Entriegelung des Beschlags 15 oder der Beschläge ohne eine entsprechende Entriegelung des Sitzschienenpaars 200 zu ermöglichen, ist der Verstellhebel 22 vorgesehen, welcher zum Einnehmen einer Bodenstellung und zur Entriegelung des oder der Beschläge entsprechend einer Betätigungsrichtung in Uhrzeigerrichtung um die Lehnen-Schwenkachse 14Y gedreht wird. An dem Verstellhebel 22 ist bevorzugt eine nicht dargestellte Schlaufe befestigt, mittels der eine reversible Betätigung des Verstellhebels 22 entgegen der Kraft einer vorgespannten Zugfeder F-22 (vergleiche Figur 3B) vorgenommen wird. In dem Verstellhebel 22 (vergleiche Figur 2) ist dazu einerseits in einer Einhängung das Federelement F-22 eingehängt, das andererseits in einer Einhängung einer Grundplatte 16 eingehängt ist.

Die Figur 2 zeigt eine perspektivische Darstellung eines Easy-Entry-Mechanismus M des erfindungsgemäßen Fahrzeugsitzes 100.

Die Rückenlehne 14 ist ebenfalls in eine Komfortstellung (nicht dargestellt) klappbar. Dazu wird ebenfalls eine reversible Betätigung des Verstellhebels 22 entgegen der Kraft einer vorgespannten Zugfeder F22 (vergleiche Figur 3B) in Uhrzeigerrichtung der Lehnen-Schwenkachse 14Y vorgenommen, so dass der oder die Beschläge 15 entriegelt ist/sind, wodurch die Rückenlehne 14 gegen die Kraft einer vorgespannten Rückenlehnenfeder (ebenfalls nicht dargestellt) nach hinten um vorzugsweise 10° verstellbar ist, indem die aufsitzende Person mit ihrem Rücken gegen die Rückenlehne drückt.

In der Bodenstellung und der Komfortstellung ist es vorgesehen, dass der Beschlag 15 wieder verriegelt ist, um den Fahrzeugsitz 100 in der jeweiligen Stellung zu halten. Um die Rückenlehne 14 wieder zu entriegeln und wieder aufzurichten, muss der Verstellhebel 22 erneut in Betätigungsrichtung in Uhrzeigerrichtung bewegt werden. Anschließend kann die Rückenlehne 14 wieder entsprechend verstellt werden.

In vorteilhafter Weise erfolgt die Sitzlängsverstellung und die Rückenlehnenklappung in vorteilhafter Weise - ohne Eingriff - in den Easy-Entry-Mechanismus, der nachfolgend erläutert wird. Bei der aus dem Stand der Technik bekannten Rückenlehnenklappung muss eine Klinke des Easy-Entry-Mechanismus M aus dem Verfahrweg eines rückenlehnenseitigen Anschlags herausbewegt werden, worin ein Nachteil gesehen wird, wie noch detailliert erläutert wird.

Dritte Grundfunktion - Easy-Entry-Stellung des Fahrzeugsitzes 100:
Bei der Easy-Entry-Klappung in die Easy-Entry-Stellung soll ein Einstieg in eine hintere Sitzreihe erleichtert werden. Bei Betätigung der Easy-Entry-Funktion wird der Beschlag 15 und das zur Sitzlängsverstellung vorgesehene Sitzschienenpaar 200 entriegelt, wodurch die Rückenlehne 14 bis zur Easy-Entry-Stellung in Blickrichtung eines Insassen des Fahrzeugsitzes 100 gesehen nach vorne geklappt und um den Verstellbereich X1 plus X2 im Sinne der Sitzlängsverstellung nach vorne gefahren wird, wodurch ein maximaler Einstiegsbereich geschaffen wird.

Der grundlegende Aufbau des Fahrzeugsitzes 100 im Zusammenbauzustand wurde bereits gemäß den Figuren 1 und 2 erläutert.

Nachfolgend wird weiter in einer Zusammenschau der Figuren 2 bis 4D der erfindungsgemäße Aufbau des Easy-Entry-Mechanismus beschrieben.

In den Figuren 2 bis 4D befindet sich der Easy-Entry-Mechanismus in einer Ausgangsposition I, bei der noch keine Betätigung stattgefunden hat.

Die in Figur 3B in der Explosionsdarstellung dargestellten Komponenten werden nachfolgend vom Verstellhebel 22 ausgehend in Richtung des adapterartigen Seitenteils 12B, welches mit der Sitzstruktur 12A des Fahrzeugsitzes 100 in Verbindung steht, beschrieben.

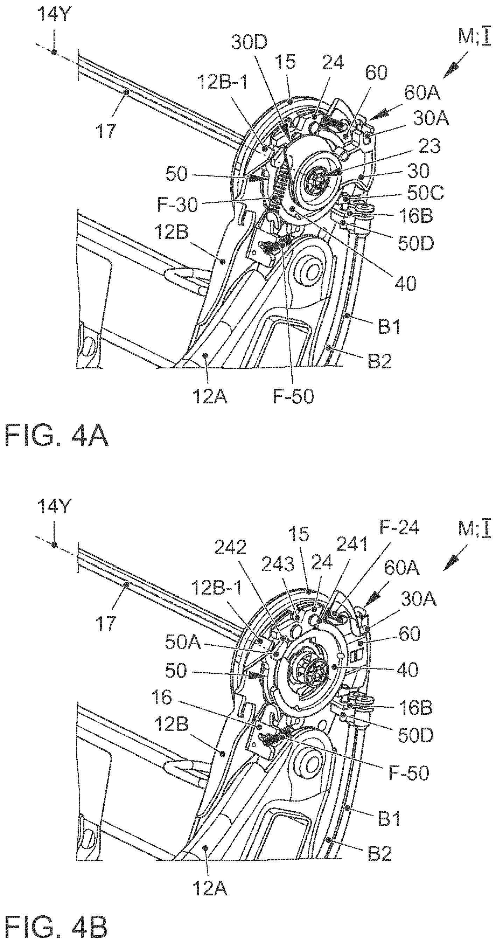

Der Verstellhebel 22 sitzt auf der Übertragungsstange 17 und ein Sicherungsring 23 (vergleiche Figuren 3B und 4A) sichert ein speziell ausgebildetes Easy-Entry-Betätigungselement 30, welches auf der Übertragungsstange 17 angeordnet ist.

Die Figur 4A zeigt den Easy-Entry-Mechanismus M gemäß Figur 2, jedoch ohne den Verstellhebel 22.

Das Easy-Entry-Betätigungselement 30 umfasst eine Bowdenaufnahme 30A (vergleiche Figuren 3B und 4A) für einen ersten Bowdenzug B1, mittels dem die Easy-Entry-Entriegelung vorgenommen wird.

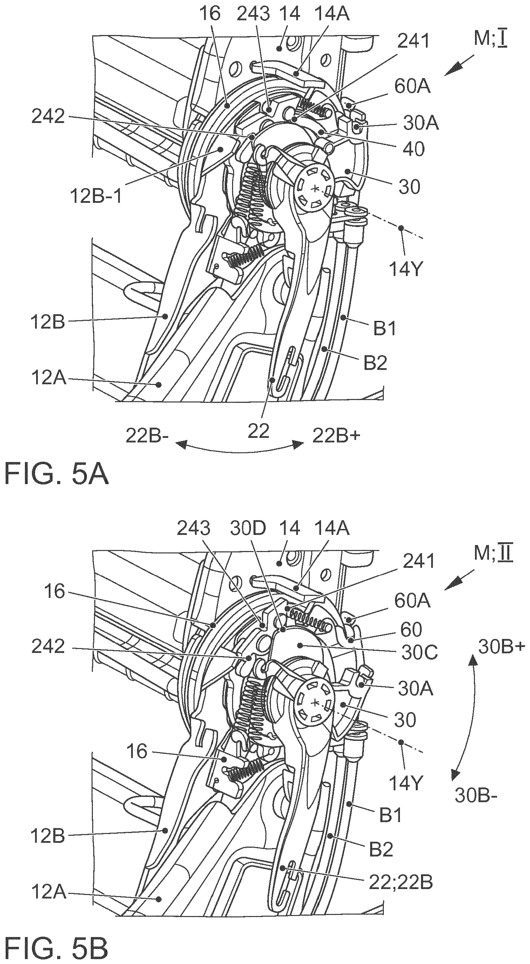

Das Easy-Entry-Betätigungselement 30 ist derart mittels eines Freilaufmechanismus 30B; 30B+, 30B- (vergleiche Figur 3) auf der Übertragungsstange 17 angeordnet, so dass eine Drehbewegung des Easy-Entry-Betätigungselements 30 ausschließlich in Uhrzeigerrichtung (vergleiche Figur 5B) mithin ohne Freilauf 30B- (vergleiche Figur 5B) auf die Übertragungsstange 17 übertragen wird. Mit anderen Worten: wird das Easy-Entry-Betätigungselement 30 um einen vorgebbaren Winkel, insbesondere um 30°, gedreht, wird die Übertragungsstange 17 mitgenommen. Durch den Freilaufmechanismus 30B wird eine Drehbewegung des Easy-Entry-Betätigungselementes 30 in entgegengesetzte Richtung 30B+, hier entgegen der Uhrzeigerrichtung, nicht auf die Übertragungsstange 17 übertragen.

Das gleiche gilt für den Verstellhebel 22. Er ist ebenfalls über einen Freilaufmechanismus 22B mit der Übertragungsstange 17 verbunden. Wird der Verstellhebel 22 bei der Entriegelung des Beschlags 15 insbesondere ebenfalls um 30° gedreht, wird die Drehbewegung des Verstellhebels 22 ohne Freilauf 22B- ausschließlich in Uhrzeigerrichtung auf die Übertragungsstange 17 übertragen. Durch den Freilaufmechanismus 22B wird eine Drehbewegung des Verstellelementes 22 in entgegengesetzte Richtung, hier entgegen der Uhrzeigerrichtung, mit wirksamem Freilauf 22B+ nicht auf die Übertragungsstange 17 übertragen.

Außerdem sind der Verstellhebel 22 und das Easy-Entry-Betätigungselement 30 voneinander entkoppelt, so dass eine Betätigung des Verstellhebels 22 das Easy-Entry-Betätigungselement 30 nicht mitbetätigt und umgekehrt.

Dadurch ist die Easy-Entry-Funktion des Fahrzeugsitzes 100 von der Neigungsverstellung der Rückenlehne 14 entkoppelt.

Von dem Easy-Entry-Betätigungselement 30 ist ein halbkreisförmiges Segment 30C (vergleiche Figuren 3B und 4A) abgesetzt ausgebildet, welches auf seiner Stirnfläche eine Gleitbahn 30D bildet.

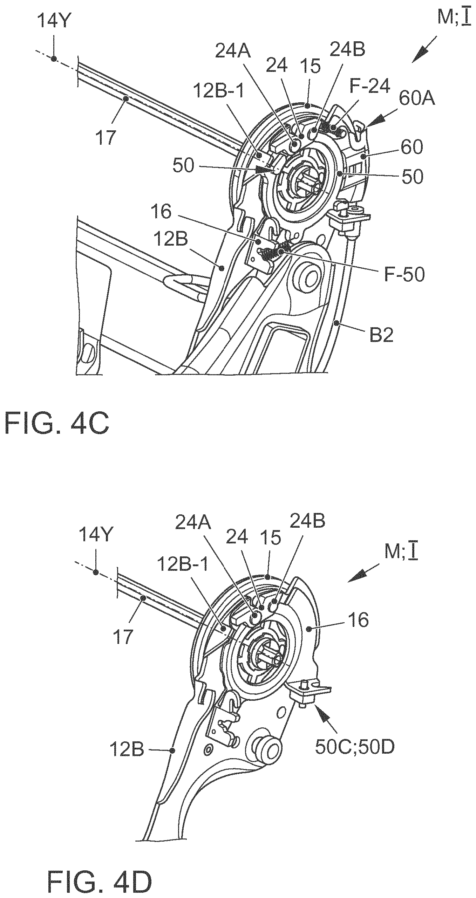

In das Easy-Entry-Betätigungselement 30 ist einerseits in einer Einhängung ein zweites Federelement F-30 eingehängt, welches andererseits in einer Einhängung einer Grundplatte 16 eingehängt ist, die im Zusammenbauzustand in Figur 4D gezeigt ist. Die Anordnung des Federelementes F-30 ist am besten in Figur 2 sichtbar.

Die Figur 4D zeigt den Easy-Entry-Mechanismus M gemäß Figur 2, jedoch ohne Verstellhebel 22 und ohne Easy-Entry-Betätigungselement 30 und ohne Sicherungselement 40 sowie ohne den Drehring 50.

Hinter dem Easy-Entry-Betätigungselement 30 in Richtung der Lehnen-Schwenkachse 14Y gesehen ist ein Sicherungselement 40 (vergleiche Figuren 3B und 4B) in der Art eines Sicherungsrings für einen Drehring 50 angeordnet, der als Antriebselement fungiert.

Die Figur 4B zeigt den Easy-Entry-Mechanismus M gemäß Figur 2, jedoch ohne Verstellhebel 22 und ohne das Easy-Entry-Betätigungselement 30.

Der Drehring 50 ist über ein drittes Federelement F-50 (vergleiche Figuren 3B und 4C) mit der Grundplatte 16 verbunden.

Die Figur 4C zeigt den Easy-Entry-Mechanismus gemäß Figur 2, jedoch ohne Verstellhebel 22 und ohne das Easy-Entry-Betätigungselement 30 und ohne das Sicherungselement 40.

Das vierte Federelement F-50 ist bevorzugt eine Zugfeder und dient der Rückführung des Drehrings 50 in eine Grundstellung. Die Zugfeder F-50 ist einerseits in einer Einhängung des Drehrings 50 eingehängt und andererseits in einer Einhängung der Grundplatte 16, wie in Figur 4B im Zusammenbauzustand am besten gezeigt ist.

Der Drehring 50 weist einen Nocken 50A (vergleiche auch Figur 4C) auf, welcher mit einer Klinke 24 (vergleiche alle Figuren) zusammenwirkt, wie noch erläutert wird.

Die Klinke 24 weist eine erste Kontur 241, eine zweite Kontur 242 und eine Stufenkontur 243 auf, die im Zusammenhang mit der Funktionsbeschreibung erläutert werden.

Der Drehring 50 ist ebenfalls drehbar um die Lehnen-Schwenkachse 14Y an der Grundplatte 16 gelagert. Die Lehnendrehachse 14Y verläuft gemäß der Darstellung mittig durch den Drehring 50.

Ein Zugelement 60 (vergleiche Figur 4C) ist fest mit dem Drehring 50 verbunden. Das Zugelement 60 ist insbesondere auf einen kooperierenden Abschnitt 50B des Drehrings 50 aufgeclipst. Die Klinke 24 ist mittels eines Klinkendrehbolzens 24A drehbar auf dem Drehring 50 gelagert.

Das Zugelement 60 umfasst eine Bowdenaufnahme 60A für die Seele des zweiten Bowdenzuges B2. Der zweite Bowdenzug B2 dient der Easy-Entry-Sitzschienen-Entriegelung des Fahrzeugsitzes 100. Wie oben bereits beschrieben, wird bei einer Betätigung des zweiten Bowdenzugs die Verriegelungsvorrichtung 200A geöffnet und die obere Schiene 201 (mithin der Fahrzeugsitz 100) ist gegenüber der karosseriefesten unteren Schiene 202 um den Betrag X1 und zusätzlich um den Betrag X2, insbesondere um weitere 70 mm, um insgesamt maximal 250mm verstellbar.

Die Klinke 24 umfasst ferner einen Steuerbolzen 24B, der fest in der um den Klinkendrehbolzen 24A schwenkbaren Klinke 24 (vergleiche Figuren 2, 5A und 5B) angeordnet ist.

Ein drittes Federelement F-24 ist einerseits an einem zu der Klinke 24 gehörenden Steuerbolzen 24B (vergleiche Figuren 2 und 4V) eingehängt, während das dritte Federelement F-24 andererseits an einem Aufnahmebolzen des Zugelementes 60 eingehängt ist.

Der Steuerbolzen 24B ragt auf der zu dem Seitenteil 12B gewandten Seite aus der Klinke 24 heraus und liegt in einer Ausgangsposition I noch nicht auf einer stirnseitig des Seitenteils 12B ausgebildeten Gleitbahn 12B-2 auf, sondern liegt in einer die Ausgangsposition I sichernden halbkreisförmigen Vertiefung 12C (vergleiche Figur 3B) des Seitenteils 12B ein. Eine solche Vertiefung 16C (vergleiche Figur 3B) ist auch in der Grundplatte 16 vorgesehen, in der der Steuerbolzen 24B in Ausgangsposition I einliegt.

Das Seitenteil 12B umfasst außerdem einen vorzugsweise angeformten sitzstrukturseitigen Easy-Entry-Anschlag 12B-1, an dem die in der Easy-Entry-Funktion in ihrer Neigung verstellte Rückenlehne 14 mittels ihres rückenlehnenseitigen Easy-Entry-Lehnenanschlags 14A anschlägt.

Die Anschläge 12B-1 des Seitenteils 12B und der Anschlag 14A der Rückenlehne 14 definieren somit die Grenzen des Schwenkbereichs der Rückenlehne 14 in der Easy-Entry-Stellung, wie noch erläutert wird.

Der Drehring 50 umfasst zudem einen Anschlag 50C (vergleiche Figur 3B), der zu einem Einsteller 50D für das Spiel des Drehrings 50 gehört. Durch den Einsteller 50D, der in einer Halterung 16B der Grundplatte ein- und ausschraubbar ist, wird das Spiel zwischen Drehring 50 und Grundplatte 16 (vergleiche Figuren 4A, 4B) eingestellt.

Die Grundplatte 16 weist zudem eine Gleitbahn 16A auf. Der Drehring 50 liegt mit seiner der Grundplatte 16 zugewandten Seite an der Gleitbahn 16A an, so dass eine reibungsarme Drehbewegung zwischen Grundplatte 16 und dem Drehring 50 gewährleistet ist.

Zur Funktionsweise:
Die Figur 5A zeigt die zuvor detailliert erläuterte Ausgangsposition I des Easy-Entry-Mechanismus M.

Die Figur 5B zeigt den Easy-Entry-Mechanismus M in einer Betätigungsposition II, jedoch noch vor einer Easy-Entry-Klappung der Rückenlehne 14 und vor der gleichzeitigen Easy-Entry-Sitzverschiebung des Fahrzeugsitzes 100.

Zum Betätigen der Easy-Entry-Funktion ist am oberen Ende der Rückenlehne 14 (vergleiche Figur 1) ein Easy-Entry-Auslöseelement, insbesondere ein Handgriff 11, vorgesehen, welcher dazu eingerichtet ist, eine Verriegelung des Easy-Entry-Mechanismus zu bewirken, wie nachfolgend erläutert wird.

Der Handgriff 11 steht mit der Seele des ersten Bowdenzuges B1 in Verbindung, wie ebenfalls in Figur 1 dargestellt ist.

Durch die Betätigung des Handgriffs 11 wird das Easy-Entry-Betätigungselement 30 (vergleiche Figur 5B gegenüber Figur 5A) in Uhrzeigerrichtung gezogen und somit wird (ohne Freilauf 30Beines Freilaufmechanismus 30B - gegenüber der Übertragungsstange 17) ebenfalls in Uhrzeigerrichtung gedreht, wodurch der Beschlag 15 entriegelt wird. Dadurch ist bereits sichergestellt, dass die Rückenlehne 14 innerhalb der Easy-Entry-Funktion auf das Sitzteil 12 in die Easy-Entry-Stellung klappbar ist, wie noch näher erläutert wird.

Durch die Betätigung des Easy-Entry-Betätigungselementes 30 wird das dritte Federelement F-30, welches einerseits in dem Segment 30C eingehängt und andererseits in der Grundplatte 16 eingehängt ist, gespannt.

Außerdem wird durch die Drehbewegung des Easy-Entry-Betätigungselementes 30 in Uhrzeigerrichtung die segmentseitige Gleitbahn 30D an dem Steuerbolzen 24B der Klinke 24 (vergleiche auch Figur 4A) entlanggeführt.

Dadurch wird die auf einer Klinken-Schwenkachse 24Y drehbar gelagerte Klinke 24 durch die Anhebung des Steuerbolzens 24B, der in den hinteren Teil der Klinke 24 integriert angeordnet ist, auf ihrer hinteren Seite angehoben. Dabei wird das zweite Federelement F-24 gespannt, das einerseits in dem Steuerbolzen 24B (vergleiche Figuren 2 und 4) und andererseits in dem Zugelement 60 (vergleiche Figur 4B) eingehängt ist.

Durch die Anhebung der Klinke 24 rückt der dem Beschlag 15 zugewandte Abschnitt des Steuerbolzens 24B, der aus der Klinke 24 herausragt, aus den Vertiefungen 12C und 16C des Seitenteiles 12B und der Grundplatte 16 aus, der bis dahin lagegesichert in den Vertiefungen 12C und 16C einliegt.

Eine zweite Kontur 242 stößt dabei an dem in der Drehebene der Klinke angeordneten Nocken 50A an, wie insbesondere durch Vergleich der Figuren 5A und 5B deutlich wird. Mit anderen Worten, der Drehwinkel der Klinke 24 ist einerseits durch die Positionierung des Nockens 50A am Drehring 50 und andererseits durch den in den Vertiefungen 12C, 16C einliegenden Steuerbolzen 24B festgelegt und begrenzt.

Durch die Kraft des zweiten Federelementes F-24 wird entgegen der Uhrzeigerrichtung an dem Zugelement 60 gezogen. Die Kraft des zweiten Federelementes F-24, das an dem Zugelement 60 zieht, führt durch die Anhebung der Klinke 24 auf ihrer hinteren Seite noch nicht dazu, dass sich der Drehring 50 entgegen Uhrzeigerrichtung dreht.

Die Drehung des Drehrings 50 entgegen der Uhrzeigerrichtung wird wie folgt vorgenommen:
Durch die Anhebung der Klinke 24 ist die erste Kontur 241 (vergleiche Figur 5B) durch die Verschwenkung der Klinke 24 soweit nach oben gefahren, dass sie von dem rückenlehnenseitigen Easy-Entry-Anschlag 14A mitgenommen wird, sobald die Rückenlehne 14 nach vorne geklappt wird.

Durch die Klappung der Rückenlehne 14 entgegen der Uhrzeigerrichtung nimmt der Easy-Entry-Anschlag 14A den Drehring 50 entgegen der Uhrzeigerrichtung mit. Dabei wird auch das Zugelement 60 mitgenommen, wodurch die Seele des zweiten Bowdenzuges B2 gezogen wird, die in einer Bowdenaufnahme 60A des Zugelementes 60 (vergleiche Figur 5B) eingehängt ist.

Durch die Betätigung des zweiten Bowdenzuges B2 erfolgt parallel zur Klappung der Rückenlehne 14 entgegen der Uhrzeigerrichtung die Entriegelung der Verriegelungsvorrichtung 200A des Sitzschienenpaars 200, so dass der Fahrzeugsitz 100 innerhalb der Easy-Entry-Funktion in Sitzlängsrichtung verstellbar ist.

Bei der Drehung des Drehrings 50 entgegen der Uhrzeigerrichtung wird das vierte Federelement gespannt, welches einerseits in der Grundplatte 16 und andererseits in dem Drehring 25 eingehängt (vergleiche Figur 4B) ist.

Der in der Easy-Entry-Funktion zurückgelegte Schwenkwinkel der Rückenlehne 14 aus ihrer Ausgangsposition I wird durch den entsprechend positionierten strukturseitigen Easy-Entry-Anschlag 12B-1 festgelegt.

Durch die gemeinsame Drehung der Klinke 24 und des Drehrings 50 bei der beschriebenen Klappung der Rückenlehne 14 kommt die Stufenkontur 243 der Klinke nach einem vorgebbaren Schwenkwinkel, der im Ausführungsbeispiel ca. 40° beträgt, mit dem in die Schwenkebene der Klinke 24 liegenden sitzstrukturseitigen Easy-Entry-Anschlag 12B-1 in Kontakt, wodurch die Schwenkbewegung der Rückenlehne 14 in Richtung des Sitzteiles 12 begrenzt ist.

In der geklappten Easy-Entry-Stellung der Rückenlehne 14 bleibt die Rückenlehne 14 unverriegelt.

Der Nutzer kann die ursprüngliche Ausgangsposition I wieder herstellen, indem er an der Rückenlehne 14 zieht und die Rückenlehne 14 in Uhrzeigerrichtung zurückschwenkt.

In der ursprünglichen Position wird die Rückenlehne 14 und auch das Sitzschienenpaar 200 wieder selbsttätig verriegelt.

Die in der Easy-Entry-Position ausgelenkten Teile werden durch die Federelemente F-24, F-30, F-50 in ihrer Ausgangsposition zurückverlagert. Die Klinke 24 wird durch das zweite Federelement F-24 in ihre Ausgangsposition zurückgezogen. Die Klinke 24 kann in ihre Ausgangsposition zurückkehren, da auch der Drehring 50 durch das vierte Federelement F-50 in Uhrzeigerrichtung in seine Ausgangsposition zurückgedreht wird. Parallel dazu wird auch das Easy-Entry-Betätigungselement 30 durch das dritte Federelement F30 in die in Figur 5A dargestellte Position entgegen der Uhrzeigerrichtung mit entsprechendem Freilauf 30B+ (ohne Mitnahme der Übertragungsstange 17) in seine Ausgangsposition I zurückgezogen.

Aus der detaillierten Beschreibung wird deutlich, dass die Klinke 24 in ihrer Ausgangsposition nicht von dem Easy-Entry-Anschlag 14A mitgenommen werden kann, worin ein wesentlicher Vorteil des erfindungsgemäßen Easy-Entry-Mechanismus M gesehen wird. Die Klinke 24 wird erst, wie zuvor detailliert erläutert ist, durch die Gleitbahn 30D des Segmentes 30C des Easy-Entry-Betätigungselementes 30 bei dessen Drehung in Uhrzeigerrichtung in den Schwenkbereich des Easy-Entry-Anschlages 14A gebracht.

In vorteilhafter Weise muss somit die Klinke 24 für die beschriebene Neigungsverstellung der Rückenlehne 14 außerhalb der Easy-Entry-Funktion nicht betätigt werden. In der in der Beschreibungseinleitung zum Stand der Technik genannten Druckschrift DE 10 2015 218 873 A1 ist eine Entriegelung der Beschläge ohne eine entsprechende Entriegelung des Sitzschienenpaars nur dann möglich, wenn die Klinke 24 durch Betätigung des Verstellhebels derart verschwenkt aus dem Verfahrweg des Easy-Entry-Anschlags 14A herausgeschwenkt wird. Mit anderen Worten, erst eine Betätigung des Verstellhebels sorgt für eine Freigabestellung des zugehörigen Easy-Entry-Mechanismus.

Bei dem erfindungsgemäßen Easy-Entry-Mechanismus sind die Bedienungsvorgänge eindeutig voneinander getrennt. In der Easy-Entry-Funktion wird ausschließlich der Handgriff 11 betätigt.

In der Neigungsverstellfunktion der Rückenlehne 14 wird ausschließlich der Verstellhebel 24 betätigt. Hierdurch ergibt sich ein wesentlicher Vorteil in der klaren Zuordnung der Bedienelemente zu der jeweiligen Funktion.

Hinzu kommt, dass der Verstellhebel in der Druckschrift DE 10 2015 218 873 A1 über ein erstes Federelement mit einer Grundplatte und über ein zweites Federelement mit der Klinke verbunden ist. Die Klinke ist dabei drehbar in einem Antriebselement gelagert, die zu dem Easy-Entry-Mechanismus gehört und mit dem Drehring 50 des erfindungsgemäßen Easy-Entry-Mechanismus M vergleichbar ist. Über dieses bei dem herkömmlichen Easy-Entry-Mechanismus zweite Federelement existiert somit ein direkter Kraftfluss zwischen Klinke und Verstellhebel, der durch die Ausgestaltung des erfindungsgemäßen Easy-Entry-Mechanismus eliminiert ist. Erfindungsgemäß ist somit eine kraftflussseitige Entkopplung des Easy-Entry-Mechanismus M ein weiterer wesentlicher Vorteil der in dieser Patentanmeldung vorgestellten Lösung.

### Bezugszeichenliste

- 100: Fahrzeugsitz
- M: Easy-Entry-Mechanismus
- I: Ausgangsposition
- II: Betätigungsposition
- 11: Easy-Entry-Auslöseelement, Handgriff
- 12: Sitzteil
- 12A: Sitzstruktur
- 12B: Seitenteil
- 12B-1: sitzstrukturseitiger Easy-Entry-Anschlag
- 12B-2: Gleitbahn
- 12C: Vertiefung
- 12D: Sitzlängsverstellhebel
- 14: Rückenlehne
- 14Y: Lehnen-Schwenkachse
- 14A: rückenlehnenseitiger Easy-Entry-Anschlag
- 15: Beschlag
- 16: Grundplatte
- 16A: Gleitbahn
- 16B: Halterung
- 16C: Vertiefung
- 17: Übertragungsstange
- 22: Verstellhebel
- 22B: Freilaufmechanismus
- 22B+: mit Freilauf
- 22B-: ohne Freilauf
- F-22: erstes Federelement
- 23: Sicherungsring
- 24: Klinke
- 24: Klinken-Schwenkachse
- F-24: zweites Federelement
- 24A: Klinkendrehbolzen
- 24B: Steuerbolzen
- 241: erste Kontur (anschlagsseitig des Anschlags 14A)
- 242: zweite Kontur (drehringseitig)
- 243: Stufenkontur (anschlagsseitig des Anschlags 12B-1)
- 30: Easy-Entry-Betätigungselement
- 30A: Bowdenaufnahme
- 30B: Freilaufmechanismus
- 30B+: mit Freilauf
- 30B-: ohne Freilauf
- 30C: Segment
- 30D: Gleitbahn
- F-30: drittes Federelement
- 40: Sicherungselement
- 50: Drehring
- 50A: Nocken
- 50B: Abschnitt
- 50C: Anschlag
- 50D: Einsteller
- F-50: viertes Federelement
- 60: Zugelement
- B1: erster Bowdenzug, Easy-Entry-Auslösung
- B2: zweiter Bowdenzug, Easy-Entry-Sitzschienenentriegelung
- 200: Sitzschienenpaar
- 201: obere Sitzschiene
- 202: untere Sitzschiene
- 200A: Verriegelungsvorrichtung

## Patentansprüche

1. Fahrzeugsitz (100), insbesondere Kraftfahrzeugsitz mit einer um eine Lehnen-Schwenkachse (14Y) schwenkbaren Rückenlehne (14), mindestens einem Sitzschienenpaar (200) zur Sitzlängsverstellung des Fahrzeugsitzes (100), einer Verriegelungsvorrichtung (200A) zur Verriegelung des mindestens einen Sitzschienenpaars (200), wobei zur Anlenkung der Rückenlehne (14) gegenüber einem Sitzteil (12) wenigstens ein verriegelbarer Beschlag (15) vorgesehen ist und die Rückenlehne (14) in eine zur leichteren Zugänglichkeit einer Sitzreihe einnehmbare Easy-Entry-Stellung verschwenkbar ist, wobei der Fahrzeugsitz (100) einen Easy-Entry-Mechanismus (M) aufweist, der eine an einem Drehring (50) angeordnete Klinke (24) umfasst, welche beim Verschwenken der Rückenlehne (14) in die Easy-Entry-Stellung von einem an der Rückenlehne (14) angeordneten Easy-Entry-Anschlag (14A) erfassbar ist und hierdurch der Bewegung der Rückenlehne (14) folgend mitführbar ist,
wobei die Klinke (24) durch ein Easy-Entry-Betätigungselement (30) von einer Easy-Entry-Anschlag (14A)-Ausgangsposition (I) in eine Easy-Entry-Anschlag (14A)-Betätigungsposition (II) bringbar ist, in der die Klinke (24) von dem Easy-Entry-Anschlag (14A) erfassbar ist, wobei das Easy-Entry-Betätigungselement (30) bei Betätigung eines mit dem Easy-Entry-Betätigungselement (30) über einen ersten Bowdenzug (B1) in Wirkverbindung stehenden Easy-Entry-Auslöseelementes (11) für eine Bewegung des Easy-Entry-Betätigungselementes (30) sorgt, wobei das Easy-Entry-Betätigungselement (30) eine Bowdenaufnahme (30A) für das in dem Easy-Entry-Mechanismus (M) angeordnete eine Ende des ersten Bowdenzuges (B1) aufweist, der mit seinem anderen Ende mit dem Easy-Entry-Auslöseelement (11) in Verbindung steht, so dass das Easy-Entry-Betätigungselement (30) die Klinke (24) in seiner Betätigungsposition (II) durch eine Wirkverbindung zwischen die Klinke (24) und das Easy-Entry-Betätigungselement (30) in die Easy-Entry-Anschlag (14A)-Betätigungsposition (II) verbringt,
**dadurch gekennzeichnet, dass**
die Klinke (24) in einem Drehring (50), der auf der Lehnendrehachse (A) drehbar gelagert ist, auf einer zur Lehnen-Schwenkachse (14Y) parallel angeordneten Klinken-Schwenkachse (24Y) drehbar gelagert ist, wobei an dem Drehring (50) ein Zugelement (60) fest angeordnet ist.

2. Fahrzeugsitz (100) nach Anspruch 1, **dadurch gekennzeichnet, dass** die Wirkverbindung zwischen Easy-Entry-Auslöseelement (11) und Easy-Entry-Betätigungselement (30) durch den ersten Bowdenzug (B1) hergestellt ist, dessen Betätigung die Betätigungsposition (II) der Klinke (24) hervorruft.

3. Fahrzeugsitz nach Anspruch 1, **dadurch gekennzeichnet, dass** die Wirkverbindung zwischen dem Easy-Entry-Betätigungselement (30) und der Klinke (24) durch eine, an einem in die Klinke (24) integrierten Steuerbolzen (24B) angreifende Gleitbahn (30C) des Easy-Entry-Betätigungselementes (30) hergestellt ist, die in der Betätigungsposition (II) für eine Verlagerung des Steuerbolzens (24B) derart sorgt, dass eine anschlagsseitige erste Kontur (241) der Klinke (24) in die Easy-Entry-Anschlag( 14A) -Betätigungsposition (II) kommt.

4. Fahrzeugsitz nach Anspruch 3, **dadurch gekennzeichnet, dass** die Gleitbahn (30C) auf einer Stirnseite eines, bezogen auf eine gegenüber einer Lehnen-Schwenkachse (14Y), radial abstehenden Segmentes (30C) des Easy-Entry-Betätigungselementes (30) gebildet ist.

5. Fahrzeugsitz (100) nach Anspruch 1, **dadurch gekennzeichnet, dass** das Easy-Entry-Betätigungselement (30) gegenüber einer entlang der Lehnen-Schwenkachse (14Y) angeordneten Übertragungsstange (17) einen Freilaufmechanismus (30B; 30B+, 30B-) aufweist.

6. Fahrzeugsitz (100) nach den Ansprüchen 2 und 5, **dadurch gekennzeichnet, dass** die Betätigung des Easy-Entry-Betätigungselementes (30) durch die Betätigung des Easy-Entry-Auslöseelementes (11), neben der Betätigung der Klinke (24) in die Betätigungsposition (II), die Drehung der Übertragungsstange (17) und damit die Entriegelung des Beschlages (15) hervorruft, da das Easy-Entry-Betätigungselement (30) gegenüber der Übertragungsstange (17) über einen Freilaufmechanismus (30B; 30B+, 30B-) verfügt, der die Mitnahme der Übertragungsstange (17) ohne Freilauf (30B-) bewirkt, sobald das Easy-Entry-Auslöseelementes (11) betätigt ist.

7. Fahrzeugsitz (100) nach Anspruch 1, **dadurch gekennzeichnet, dass** das Zugelement (60) eine Bowdenaufnahme (60A) für das in dem Easy-Entry-Mechanismus (M) angeordnete eine Ende eines zweiten Bowdenzuges (B2) aufweist, der mit seinem anderen Ende mit der Verriegelungsvorrichtung (200A) des Sitzschienenpaars (200) in Wirkverbindung steht.

8. Fahrzeugsitz nach den Ansprüchen 1 und 7, **dadurch gekennzeichnet, dass** der Entry-Anschlag (14A) durch eine Bewegung der Rückenlehne (14) die Klinke (24) an der ersten Kontur (241) erfasst, wodurch der Drehring (50) und das Zugelement (60) um die Lehnen-Schwenkachse (14Y) verschwenkt wird, so dass der zweite Bowdenzug (B2) betätigt und die Verriegelungsvorrichtung (200A) des Sitzschienenpaars (200) entriegelt wird.

9. Fahrzeugsitz (100) nach Anspruch 1, **dadurch gekennzeichnet, dass** der Fahrzeugsitz (100) einen auf der Übertragungsstange (17) angeordneten Verstellhebel (22) zur Neigungsverstellung der Rückenlehne (14) gegenüber dem Sitzteil (12) mit einem Freilaufmechanismus (22B; 22B+, 22B-) aufweist, der an dem Easy-Entry-Mechanismus (M) angeordnet ist, jedoch kraftflussseitig von dem Easy-Entry-Mechanismus (M) entkoppelt ist.

## Claims

1. Vehicle seat (100), in particular a motor vehicle seat comprising a backrest (14) which can be pivoted about a backrest pivot axis (14Y), at least one seat rail pair (200) for longitudinal seat adjustment of the vehicle seat (100), a locking device (200A) for locking the at least one seat rail pair (200), at least one lockable fitting (15) being provided for the articulation of the backrest (14) with respect to a seat part (12), and the backrest (14) being pivotable into an easy entry position which can be assumed for easier accessibility to a seat row, the vehicle seat (100) comprising an easy entry mechanism (M) which comprises a latch (24) arranged on a rotating ring (50), which latch can be caught by an easy entry stop (14A) arranged on the backrest (14) during the pivoting of the backrest (14) into the easy entry position and driven therewith following the movement of the backrest (14), it being possible, by means of an easy entry actuation element (30), to bring the latch (24) from an easy entry stop (14A) starting position (I) into an easy entry stop (14A) actuation position (II) in which the latch (24) can be caught by the easy entry stop (14A), the easy entry actuation element (30) ensuring, during actuation of an easy entry triggering element (11) operatively connected to the easy entry actuation element (30) via a first Bowden cable (B1), a movement of the easy entry actuation element (30), the easy entry actuation element (30) comprising a Bowden holder (30A) for the end of the first Bowden cable (B1) that is arranged in the easy entry mechanism (M), which Bowden cable is connected by its other end to the easy entry triggering element (11), such that the easy entry actuation element (30) brings the latch (24), in its actuation position (II), into the easy entry stop (14A) actuation position (II) by means of an operative connection between the latch (24) and the easy entry actuation element (30),
**characterized in that**
the latch (24) is rotatably mounted in a rotating ring (50), which is rotatably mounted on the backrest rotational axis (A), on a latch pivot axis (24Y) arranged in parallel with the backrest pivot axis (14Y), a pulling element (60) being fixedly arranged on the rotating ring (50).

2. Vehicle seat (100) according to claim 1, **characterized in that** the operative connection between the easy entry triggering element (11) and the easy entry actuation element (30) is produced by the first Bowden cable (B1), the actuation of which brings about the actuation position (II) of the latch (24).

3. Vehicle seat according to claim 1, **characterized in that** the operative connection between the easy entry actuation element (30) and the latch (24) is produced by a sliding track (30C) of the easy entry actuation element (30), which sliding track acts on a control pin (24B) integrated into the latch (24) and ensures, in the actuation position (II), a displacement of the control pin (24B) in such a way that a stop-side first contour (241) of the latch (24) arrives in the easy entry stop (14A) actuation position (II).

4. Vehicle seat according to claim 3, **characterized in that** the sliding track (30C) is formed on an end face of a segment (30C) of the easy entry actuation element (30), which segment projects radially relative to with respect to a backrest pivot axis (14Y).

5. Vehicle seat (100) according to claim 1, **characterized in that** the easy entry actuation element (30) has a freewheel mechanism (30B; 30B, 30B-) relative to a transmission rod (17) arranged along the backrest pivot axis (14Y).

6. Vehicle seat (100) according to claims 2 and 5, **characterized in that** the actuation of the easy entry actuation element (30) by the actuation of the easy entry triggering element (11), in addition to the actuation of the latch (24) into the actuation position (II), brings about the rotation of the transmission rod (17) and thus the unlocking of the fitting (15), since the easy entry actuation element (30) has a freewheel mechanism (30B; 30B, 30B-) relative to the transmission rod (17), which freewheel mechanism brings about driving of the transmission rod (17) without a freewheel (30B-) as soon as the easy entry triggering element (11) is actuated.

7. Vehicle seat (100) according to claim 1, **characterized in that** the pulling element (60) has a Bowden holder (60A) for the end of a second Bowden cable (B2) that is arranged in the easy entry mechanism (M), which second Bowden cable is operatively connected by its other end to the locking device (200A) of the seat rail pair (200).

8. Vehicle seat according to claims 1 and 7, **characterized in that** the entry stop (14A) catches the latch (24) on the first contour (241) by a movement of the backrest (14), as a result of which the rotating ring (50) and the pulling element (60) are pivoted about the backrest pivot axis (14Y), so that the second Bowden cable (B2) is actuated and the locking device (200A) of the seat rail pair (200) is unlocked.

9. Vehicle seat (100) according to claim 1, **characterized in that** the vehicle seat (100) comprises an adjusting lever (22) arranged on the transmission rod (17) for adjusting the inclination of the backrest (14) relative to the seat part (12) using a freewheel mechanism (22B; 22B+, 22B-), which is arranged on the easy entry mechanism (M) but is decoupled from the easy entry mechanism (M) on the power flow side.

## Revendications

1. Siège de véhicule (100), en particulier siège de véhicule automobile comportant un dossier (14) pouvant pivoter autour d'un axe de pivotement de dossier (14Y), au moins une paire de rails de siège (200) pour le réglage longitudinale du siège de véhicule (100), un dispositif de verrouillage (200A) pour le verrouillage de l'au moins une paire de rails de siège (200), dans lequel pour l'articulation du dossier (14) par rapport à une partie de siège (12) au moins une ferrure pouvant être verrouillée (15) est prévue et le dossier (14) peut pivoter dans une position d'accès facile pour un accès plus facile à une rangée de sièges, dans lequel le siège de véhicule (100) présente un mécanisme d'accès facile (M), qui comprend un cliquet (24) disposé sur une bague rotative (50), qui, lors du pivotement du dossier (14) dans la position d'accès facile, peut être détecté par une butée d'accès facile (14A) disposée sur le dossier (14) et ainsi peut être entraîné en suivant le mouvement du dossier (14), dans lequel le cliquet (24) peut être amené, par l'intermédiaire d'un élément d'actionnement d'accès facile (30) d'une position de sortie (I) de butée d'accès facile (14A) dans une position d'actionnement (II) de butée d'accès facile (14A), dans laquelle le cliquet (24) peut être détecté par la butée d'accès facile (14A), dans lequel l'élément d'actionnement d'accès facile (30), lors de l'actionnement d'un élément de déclenchement d'accès facile (11) relié de manière fonctionnelle à l'élément d'actionnement d'accès facile (30) par le biais d'un premier câble de Bowden (B1) assure un mouvement de l'élément d'actionnement d'accès facile (30), dans lequel l'élément d'actionnement d'accès facile (30) présente une prise de Bowden (30A) pour une extrémité du premier câble de Bowden (B1) disposée dans le mécanisme d'accès facile (M), qui est en liaison avec son autre extrémité avec l'élément de déclenchement d'accès facile (11), en sorte que l'élément d'actionnement d'accès facile (30) déplace le cliquet (24) dans sa position d'actionnement (II) par l'intermédiaire d'une liaison active entre le cliquet (24) et l'élément d'actionnement d'accès facile (30) dans la position d'actionnement (II) de butée d'accès facile (14A),
**caractérisé en ce que**
le cliquet (24) est monté rotatif dans une bague rotative (50), qui est montée rotative sur l'axe de rotation de dossier (A), sur un axe de pivotement de cliquet (24Y) disposé parallèlement à l'axe de pivotement de dossier (14Y), dans lequel un élément de traction (60) est disposé sur la bague rotative (50).

2. Siège de véhicule (100) selon la revendication 1, **caractérisé en ce que** la liaison fonctionnelle entre l'élément de déclenchement d'accès facile (11) et l'élément d'actionnement d'accès facile (30) est créée par le premier câble de Bowden (B1), dont l'actionnement provoque la position d'actionnement (II) du cliquet (24).

3. Siège de véhicule selon la revendication 1, **caractérisé en ce que** la liaison fonctionnelle entre l'élément d'actionnement d'accès facile (30) et le cliquet (24) est créée par une glissière (30C) de l'élément d'actionnement d'accès facile (30) en prise avec un boulon de commande (24B) intégré dans le cliquet (24), qui dans la position d'actionnement (II) assure un déplacement du boulon de commande (24B) en sorte qu'un premier contour (241) côté butée du cliquet (24) vienne dans la position d'actionnement (II) de butée d'accès facile (14A).

4. Siège de véhicule selon la revendication 3, **caractérisé en ce que** la glissière (30C) est formée sur un côté frontal d'un segment (30C) radialement en saillie par rapport à un axe de pivotement de dossier (14Y) de l'élément d'actionnement d'accès facile (30).

5. Siège de véhicule (100) selon la revendication 1, **caractérisé en ce que** l'élément d'actionnement d'accès facile (30) présente un mécanisme de roue libre (30B ; 30B+, 30B-), en regard d'une tige de transmission (17) disposée le long de l'axe de pivotement de dossier (14Y).

6. Siège de véhicule (100) selon les revendications 2 et 5,
**caractérisé en ce que** l'actionnement de l'élément d'actionnement d'accès facile (30) provoque, par l'actionnement de l'élément de déclenchement d'accès facile (11), en plus de l'actionnement du cliquet (24) dans la position d'actionnement (II), la rotation de la tige de transmission (17) et ainsi le déverrouillage de la ferrure (15), car l'élément d'actionnement d'accès facile (30) dispose en regard de la tige de transmission (17) d'un mécanisme de roue libre (30B ; 30B+, 30B-), qui provoque l'entraînement de la tige de transmission (17) sans roue libre (30B-), dès que l'élément de déclenchement d'accès facile (11) est actionné.

7. Siège de véhicule (100) selon la revendication 1, **caractérisé en ce que** l'élément de traction (60) présente une prise de Bowden (60A) pour la première extrémité d'un second câble de Bowden (B2) disposée dans le mécanisme d'accès facile (M), qui est en liaison fonctionnelle avec son autre extrémité avec le dispositif de verrouillage (200A) de la paire de rails de siège (200).

8. Siège de véhicule selon les revendications 1 et 7, **caractérisé en ce que** la butée d'accès (14A) détecte, par un mouvement du dossier (14) le cliquet (24) sur le premier contour (241), moyennant quoi la bague rotative (50) et l'élément de traction (60) sont pivotés autour de l'axe de pivotement de dossier (14Y), en sorte que le second câble de Bowden (B2) est actionné et le dispositif de verrouillage (200A) de la paire de rails de siège (200) est déverrouillé.

9. Siège de véhicule (100) selon la revendication 1, **caractérisé en ce que** le siège de véhicule (100) présente un levier de réglage (22) disposé sur la tige de transmission (17) pour le réglage d'inclinaison du dossier (14) par rapport à la partie de siège (12) avec un mécanisme de roue libre (22B ; 22B+, 22B-), qui est disposé sur le mécanisme d'accès facile (M), cependant découplé du mécanisme d'accès facile (M) du côté du flux de forces.
